# EUROPEAN PATENT SPECIFICATION

(11) **EP 4 471 972 B1**
(45) Date of publication and mention of the grant of the patent: **02.12.2026**
(21) Application number: 24207789.9
(22) Date of filing: 08.10.2021
(51) Int. Cl.: H01M 50/121, H01M 50/103, H01M 50/119, H01M 50/107, H01M 50/581, H01M 50/122, H01M 50/578, H01M 50/474, H01M 50/186, H01M 50/184, H01M 10/04, H01M 50/342, H01M 50/153, H01M 50/572, H01M 50/166, H01M 50/109, H01M 50/116, H01M 50/124, H01M 50/483

(54) **SECONDARY BATTERY HAVING CONDUCTIVE LAYER FORMED ON INNER SURFACE OF BATTERY CASE**
SEKUNDÄRBATTERIE MIT EINER AUF DER INNENFLÄCHE DES BATTERIEGEHÄUSES GEFORMTEN LEITFÄHIGEN SCHICHT
BATTERIE SECONDAIRE AYANT UNE COUCHE CONDUCTRICE FORMÉE SUR LA SURFACE INTERNE D'UN BOÎTIER DE BATTERIE

(30) Priority: 27.10.2020 KR 20200140348; 27.10.2020 KR 20200140607
(43) Date of publication of application: 04.12.2024
(62) Document number(s) of the earlier application(s) in accordance with Art. 76 EPC: 21886609.3 / 4 087 031
(73) Proprietor: LG Energy Solution, Ltd., Seoul 07335 (KR)
(72) Inventor: YUN, Hyunwoong, 34122 Daejeon (KR); KANG, Sungjoong, 34122 Daejeon (KR)
(74) Representative: Goddar, Heinz J.

(56) References cited:
- WO-A1-2013/153693
- CN-B- 107 658 477
- US-A1- 2006 127 758
- US-A1- 2019 109 303
- ESTEGHAMATIAN M ET AL: "Effect of lithium doping on the conductivity of poly(p-phenylene vinylene)", SYNTHETIC METALS, ELSEVIER SEQUOIA LAUSANNE, CH, vol. 63, no. 3, 1 April 1994 (1994-04-01), pages 195 - 197, XP024171925, ISSN: 0379-6779, [retrieved on 19940401], DOI: 10.1016/0379-6779(94)90226-7

## Description

### [TECHNICAL FIELD]

The present disclosure relates to a secondary battery having a conductive layer formed on the inner surface of a battery case.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

Recently, along with the increase of the technological development and demand for mobile devices such as portable computers, portable phones, and cameras, the demand for secondary batteries has also sharply increased as an energy source. Among such secondary batteries is a lithium secondary battery exhibiting high charge/discharge characteristics and lifetime characteristics and being environmentally friendly, in which much research has been carried out and which is now commercialized and widely used.

Generally, the secondary battery has a structure in which an electrode assembly comprising a positive electrode, a negative electrode, and a porous separator is built into in a battery case in a state of being impregnated with a non-aqueous electrolyte.

In this case, depending upon the shape of a battery case, a secondary battery may be generally classified as a cylindrical secondary battery or a prismatic secondary battery in which a stacked/folded type, or wound type electrode assembly is housed in a case made of metal as a battery case, a pouch type secondary battery in which a stacked type or stacked/folding type electrode assembly is built into a pouch type battery case made of an aluminum laminate sheet, and a coin-type secondary battery in which a coin-type electrode assembly is housed in an upper case and a lower case made of metal.

Here, the exterior material of the cylindrical, prismatic, or coin-type secondary battery, i.e., the battery case, is generally made of metal, especially stainless steel (SUS).

However, there is a problem that when such a metal comes into contact with an electrolyte, corrosion occurs, and especially when an imide-based lithium salt is used, corrosion is deepened.

In this regard, conventionally1, corrosion has been suppressed by a method of coating the battery case of such a secondary battery with an inexpensive metal such as Cr, Zn, Sn, etc., which does not easily cause corrosion, but these also have a problem that not only a sufficient corrosion-preventing effect cannot be obtained with a metal, but also a browning phenomenon occurs on the metal surface.

Therefore, there is a need to develop a technology for a secondary battery that can solve the above problems and effectively prevent the corrosion of a metal can regardless of the type of electrolyte.

US 2006/127758 A1 discloses a coin-type alkaline cell with a can made from nickel or stainless steel which undergoes a surface treatment with an electrically conductive polymer, polyaniline and tin. The cell also comprises a ring gasket which seals the first and the second case.

CN 107658477 B discloses an alkaline zinc-manganese dry battery having a cylindrical shape composed of a steel case with a sealing ring and a current collector. The steel case has a conductive coating on its inner wall comprising of graphene. The conductive coating also contains a binder.

WO 2013/153693 A1 discloses that maintaining electrodes under a compressive force improves the life of a battery.

### [DETAILED DESCRIPTION OF THE INVENTION]

### [Technical Problem]

The present disclosure has been made to solve the above-mentioned problems and other technical problems that have yet to be resolved.

Specifically, an object of the present disclosure is to provide a secondary battery that can effectively suppress the corrosion of the secondary battery case due to contact with the electrolyte.

### [Technical Solution]

In order to achieve the above object, according to one embodiment of the present disclosure, there is provided a secondary battery configured such that an electrode assembly including a positive electrode, a separator, and a negative electrode is housed in a battery case together with an electrolyte solution,
wherein the battery case is made of metal, and a conductive polymer layer is formed on a part or the whole of the inner surface of the battery case coming into contact with the electrolyte solution, the electrode assembly is a coin-type electrode assembly, the battery case comprises a first case for housing the electrode assembly; and a second case for covering the upper end part of the first case, a conductive layer made of a conductive polymer layer is formed on an inner surface where the first case and the second case come into contact with an electrolyte solution, and the conductive polymer layer comprises at least one conductive polymer selected from the group consisting of poly(3,4-ethylenedioxythiophene)/poly(4-styrene sulfonate (PEDOT/PSS), polypyrrole (PPy), polythiophene (PT), and polyacetylene (PA).

According to another embodiment, there is provided a secondary battery configured such that an electrode assembly including a positive electrode, a separator, and a negative electrode is housed in a battery case together with an electrolyte solution, wherein the battery case is made of metal, and a conductive polymer layer is formed on a part or the whole of the inner surface of the battery case coming into contact with the electrolyte solution, the secondary battery is a cylindrical secondary battery, the electrode assembly is a jelly-roll type or stack/folding type electrode assembly, the battery case comprises a cylindrical can that includes a housing part in which the electrode assembly and the electrolyte solution are housed together and a beading part located at an upper part of the housing part; and a cap assembly that is mounted on the opened upper end part of the cylindrical can and comprises an upper end cap as a protrusion-type electrode terminal, the conductive layer made of a conductive polymer layer is formed on a bottom surface of the cylindrical can and the partial or whole surface of the cap assembly toward the inner surface of the secondary battery, and the conductive polymer layer comprises at least one conductive polymer selected from the group consisting of poly(3,4-ethylenedioxythiophene)/poly(4-styrene sulfonate (PEDOT/PSS), polypyrrole (PPy), polythiophene (PT), and polyacetylene (PA).

According to another embodiment, provided is a secondary battery configured such that an electrode assembly including a positive electrode, a separator, and a negative electrode is housed in a battery case together with an electrolyte solution, wherein the battery case is made of metal, and a conductive layer made of one selected from the group consisting of a conductive carbon layer and a conductive polymer layer is formed on a part or the whole of the inner surface of the battery case coming into contact with the electrolyte solution, wherein the conductive carbon layer is composed of graphene and binder polymer in a weight ratio of 3:7 to 99: 1, wherein the conductive polymer layer comprises at least one conductive polymer selected from the group consisting of poly(3,4-ethylenedioxythiophene)/poly(4-styrene sulfonate (PEDOT/PSS), polyaniline (PANI), polypyrrole (PPy), polythiophene (PT), and polyacetylene (PA), the secondary battery is a prismatic secondary battery, the electrode assembly is a jelly-roll type or stack/folding type electrode assembly, the battery case comprises a rectangular can body that is opened in its upper end and houses the electrode assembly and the electrolyte solution together; and a top cap including cap terminals that are coupled and sealed to the upper end part of the can body and are connected to the electrode terminals of the electrode assembly, and a conductive layer is formed on a surface of the cap terminals of the top cap toward the inner surface of the secondary battery.

Further embodiments are disclosed in the dependent claims.

Moreover, the secondary battery further comprises a spring and a spacer that fill an inner space excluding the electrode assembly in the inside of the first case and the second case,
the spring and the spacer are made of metal,
a conductive polymer layer is formed on a surface where the spring and the spacer come into contact with the electrolyte solution.

Further, the secondary battery may further comprise a gasket for sealing the first case and the second case.

More specifically, a gasket is mounted on the upper part of the beading part of the cylindrical can,
the cap assembly is configured such that a safety device for current interruption (PTC device) and a safety vent for internal pressure drop are stacked under the upper end cap, and a current interruption device (CID) is formed at the lower end of the safety vent,
the electrode assembly comprises a positive electrode tab and a negative electrode tab that are drawn out from the electrode assembly, wherein the positive electrode tab is connected to the cap assembly, and the negative electrode tab is connected to the bottom surface spaced apart from the housing part of the cylindrical can, and
the conductive layer is formed on the inside surface of the secondary battery, in at least one member selected from the group consisting of the top cap, the bottom surface of the cylindrical can, the safety device for blocking current, a safety vent, a current interruption device, a positive electrode tab, and a negative electrode tab.

On the other hand, in any of the above examples, the metal may be made of any one selected from the group consisting of aluminum, nickel, stainless steel (SUS), copper, iron, bronze, and brass.

The secondary battery may further comprise a hollow center pin inserted into the center of the electrode assembly.

The conductive layer may be formed to a thickness of 0.01 *µ*m to 100 *µ*m.

### [BRIEF DESCRIPTION OF THE DRAWINGS]

Fig. 1 is an exploded perspective view of a coin-type secondary battery according to an embodiment of the present disclosure;
Fig. 2 is a cross-sectional schematic view of a coin-type secondary battery according to an embodiment of the present disclosure;
Fig. 3 is a schematic diagram of a cylindrical secondary battery according to another embodiment of the present disclosure; and
Fig. 4 is a schematic diagram of a prismatic secondary battery according to another embodiment of the present disclosure.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

Further, throughout the specification, when a portion is referred to as "including" a certain component, it means that the portion can further include other components, without excluding the other components, unless otherwise stated.

According to one embodiment of the present disclosure, there can be provided a secondary battery configured such that an electrode assembly including a positive electrode, a separator, and a negative electrode is housed in a battery case together with an electrolyte solution, wherein the battery case is made of metal, and a conductive polymer layer is formed on a part or the whole of the inner surface of the battery case coming into contact with the electrolyte solution.

Specifically, the position where the conductive layer is formed may differ depending on the type of secondary battery.

Specifically, the conductive layer may be formed on a surface coming into contact with an electrolyte solution, and more specifically, the conductive layer may be formed at a position at which it should have conductivity while coming into contact with the electrolyte solution.

In one example, first, the secondary battery may be a coin-type secondary battery,
the electrode assembly is a coin-type electrode assembly,
the battery case comprises a first case for housing the electrode assembly; and a second case for covering the upper end part of the first case,
a conductive layer is formed on an inner surface where the first case and the second case come into contact with an electrolyte solution.

More specifically, the secondary battery further comprises a spring and a spacer that fill an inner space excluding the electrode assembly in the inside of the first case and the second case,
the spring and the spacer are made of metal,
a conductive layer is formed on a surface where the spring and the spacer come into contact with the electrolyte solution.

That is, the first case, the second case, the spring, and the spacer are made of metal, and the degree of corrosion is severe depending on what kind of material is used as the electrolyte solution, the lifespan characteristics are deteriorated, or it will be unusable any more or the safety may be threatened.

Thus, according to the present disclosure, a conductive layer can be formed on a surface where the first case, the second case, the spring, and the spacer come into contact with the electrolyte, thereby preventing corrosion due to the electrolyte solution while having conductivity.

Meanwhile, the secondary battery may further include a gasket for sealing the first case and the second case.

The gasket is generally made of an insulating material and thus, the conductive layer need not be formed. However, the conductive layer may also be formed on a surface of the gasket, and such a structure is not excluded.

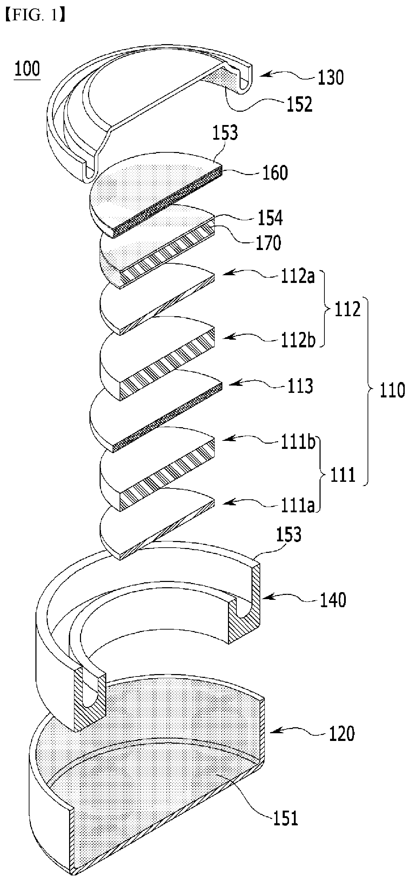

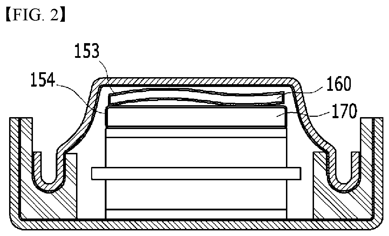

In the present disclosure, a perspective view of a coin-type secondary battery having such a conductive layer formed therein is shown in Fig. 1, and a schematic diagram of the cross section is shown in Fig. 2.

Referring to Figs. 1 and 2 together, the coin-type secondary battery 100 of the present disclosure includes an electrode assembly 110; a first case 120 for housing the electrode assembly 110; a second case 130 assembled so as to cover the upper end of the first case 120; and a spring 160 and a spacer 170 that fill an inner space excluding the electrode assembly in the inside of the first case and the second case.

At this time, the electrode assembly 110 includes a positive electrode 111, a negative electrode 112, and a separator 113 interposed between the positive electrode 111 and the negative electrode 112, wherein the positive electrode 111, the negative electrode 112 and the separator 113 have a coin-type structure.

Meanwhile, the first case 120, the second case 130, the spring 160 and the spacer 170 are made of metal and thus, in order to prevent corrosion due to the reaction with an electrolyte solution, conductive layers 151, 152, 153 and 154 made of a conductive polymer layer are formed on a surface coming into contact with the electrolyte solution, respectively.

Meanwhile, the coin-type secondary battery 100 may further include a gasket 140 for sealing the first case 120 and the second case 130.

Moreover, the conductive layers 151, 152, 153 and 154 preferably include a material having conductivity, considering that the cases, spring and spacer of the coin-type secondary battery are made of metal, and these themselves serve as electrode terminals. In particular, when the conductive layers 151 , 152 , 153 and 154 are formed wholly on the inner surface of the case, ensuring conductivity as much as corrosion is prevented is a very important issue. Even if the corrosion is prevented, the performance as a secondary battery will be eventually deteriorated if the conductivity is not sufficiently secured, and thus there is no choice but to lose the meaning of the invention.

Therefore, the conductive layers 151 , 152 , 153 and 154 are made of a conductive polymer layer.

Such specific materials will be described again below.

On the other hand, in another embodiment of the present disclosure, the secondary battery is a cylindrical secondary battery,
the electrode assembly is a jelly-roll type or stack/folding type electrode assembly,
the battery case comprises a cylindrical can that includes a housing part in which the electrode assembly and the electrolyte solution are housed together and a beading part located at an upper part of the housing part; and a cap assembly that is mounted on the opened upper end part of the cylindrical can and comprises an upper end cap as a protrusion-type electrode terminal, and
the conductive layer may be formed on a bottom surface of the cylindrical can and the partial or whole surface of the cap assembly toward the inner surface of the secondary battery.

More specifically, a gasket is mounted on the upper part of the beading part of the cylindrical can,
the cap assembly is configured such that a safety device for current interruption (PTC device) and a safety vent for internal pressure drop are stacked under the upper end cap, and a current interruption device (CID) is formed at the lower end of the safety vent,
the electrode assembly comprises a positive electrode tab and a negative electrode tab that are drawn out from the electrode assembly, wherein the positive electrode tab is connected to the cap assembly, and the negative electrode tab is connected to the bottom surface spaced apart from the housing part of the cylindrical can, and
the conductive layer is formed on the inside surface of the secondary battery, in at least one member selected from the group consisting of the top cap, the bottom surface of the cylindrical can, the safety device for blocking current, a safety vent, a current interruption device, a positive electrode tab, and a negative electrode tab.

That is, the bottom part of the cylindrical can and the components of the cap assembly are made of metal, and the degree of corrosion is severe depending on what kind of material is used as the electrolyte solution, the lifespan characteristics are deteriorated, or it will be unusable any more or the safety may be threatened.

Additionally, the components necessarily require conductivity.

Thus, according to the present disclosure, a conductive layer can be formed on a surface where the components come into contact with the electrolyte solution, thereby preventing corrosion due to the electrolyte solution while having conductivity.

On the other hand, the housing part, the beading part, and the gasket excluding the bottom surface of the cylindrical can do not necessarily require conductivity as described above, and thus the conductive layer does not need to be formed. However, a conductive layer may also be formed on the surfaces of these components, and such a structure is not excluded.

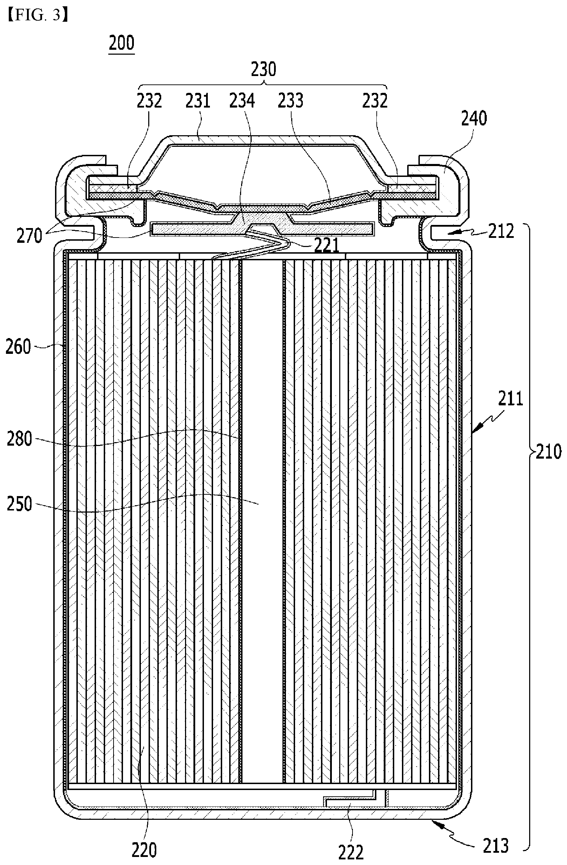

In the present disclosure, a perspective view of a cylindrical secondary battery in which such a conductive layer is formed is shown in Fig. 3 below.

Referring to Fig. 3, the secondary battery 200 according to the present disclosure is structured such that an electrode assembly 120 including a positive electrode, a separator, and a negative electrode is housed together with an electrolyte solution in a cylindrical can 210 including a housing part 211 and a beading part 212 as a battery case, wherein a cap assembly 230 including the upper end cap 231 is located at the opened upper end part of the cylindrical can 210 and seals the cylindrical can 210.

In this case, the electrode assembly 220 may be a jelly-roll type or a stack/folding type electrode assembly, without being limited thereto.

The jelly-roll type electrode assembly is manufactured by interposing a sheet-type separator between a sheet-type positive electrode and a sheet-type negative electrode and winding it.

The stack/folding type electrode assembly is manufactured by arranging a unit electrode, a full cell stacked so that electrodes having the same polarity are located at both ends, and a bi-cell stacked so that electrodes having different polarities are located at both ends, on a sheet-type separation film, and winding the same.

Specific configurations of the jelly-roll type electrode assembly and the stack/folding type electrode assembly are conventionally known, and thus detailed descriptions thereof will be omitted herein.

More specifically, the secondary battery 200 according to the present disclosure includes a gasket 240 mounted on the upper end part of the beading part 212 of the cylindrical can 210, and is formed in a structure in which the cap assembly 230 includes an upper end cap 231, a current interruption safety device (PTC device, 232) stacked under the upper end cap 231 and a safety vent 233 for internal pressure drop, and a current interruption device (CID) 234 formed at the lower end of the safety vent 233.

Further, the positive electrode tab 221 and the negative electrode tab 222 are drawn out from the electrode assembly 220, the positive electrode tab 221 is connected to the cap assembly 230, and the negative electrode tab 222 is connected to a bottom surface 213 spaced apart from a housing part 211 of the cylindrical can 230.

Here, the current interruption safety device 232, the safety vent 233, and the current interruption device 234 all are preferably structures through which current flows, which are formed in order to ensure the safety of the secondary battery.

Since other specific contents are conventionally known, a description thereof will be omitted herein.

On the other hand, as described above, the current interruption safety device 232, the safety vent 233, the current interruption device 234, as well as the upper end cap 231 serving as a positive electrode terminal, the bottom surface 213 of the cylindrical can 210 serving as a negative electrode terminal, and the positive electrode tab 221 and the negative electrode tab 222 preferably have conductivity. Therefore, a conductive layer 170 may be formed on the inside surface of the secondary battery 100 in order to prevent corrosion due to leakage of the electrolyte solution while maintaining conductivity, in which the secondary battery 100 includes the upper end cap 131, the bottom surface 113 of the cylindrical can, the current interruption safety device 132, the safety vent 133, the current interruption device 134, the positive electrode tab 121, and the negative electrode tab 122.

In this case, the conductive layer 170 may be formed wholly on the surface of the above members exposed inside the secondary battery, but may be formed only on a surface toward the electrode assembly in each member.

On the other hand, a conductive layer for corrosion prevention may be formed on the housing part 211, the beading part 212, and the gasket 140 excluding the bottom surface 213 of the cylindrical can 210, without being limited thereto, or the above components do not necessarily require conductivity, and thus other anti-corrosion layers 160 may be formed.

Furthermore, the secondary battery 200 according to the present disclosure may further include a hollow center pin 250 inserted into the center of the jelly-roll type electrode assembly 220.

At this time, the center pin 250 may also be made of any one selected from the group consisting of metal, specifically aluminum, nickel, stainless steel (SUS), copper, iron, bronze, and brass, which thus causes corrosion to the electrolyte. However, the conductivity is not necessarily required.

Therefore, although the outer surface and the inner surface of the center pin 250 are not clearly shown in the figure, also in the outer surface coming into contact with an electrolyte solution in the center pin 250, a conductive layer may be formed, other anti-corrosion layers 280 may be additionally formed, and more specifically, the anti-corrosion layer 280 may be formed up to the hollow inner surface.

That is, according to the present disclosure, the conductive layer 270 may be formed at a portion that is likely to come into contact with the electrolyte solution, whereby the conductivity may not be lowered while effectively preventing corrosion due to contact with the electrolyte solution, which is thus more preferable.

In another embodiment, the secondary battery is a prismatic secondary battery,
the electrode assembly is a jelly-roll type or stack/folding type electrode assembly,
the battery case comprises a rectangular can body that is opened in its upper end and houses the electrode assembly and the electrolyte solution together; and a top cap including cap terminals that are coupled and sealed to the upper end part of the can body and are connected to the electrode terminals of the electrode assembly, and
a conductive layer is formed on a surface of the cap terminals of the top cap toward the inner surface of the secondary battery.

More specifically, the electrode assembly comprises a positive electrode tab and a negative electrode tab drawn out from the electrode assembly, wherein the positive tab and the negative tab are respectively connected to the cap terminals, and
a conductive layer is formed on the inside surface of the secondary battery, in at least one member selected from the group consisting of the positive electrode tab and the negative electrode tab.

That is, the inner surface of the cap terminals of the top cap, the positive electrode tab, and the negative electrode tab are made of metal, and the degree of corrosion is severe depending on what kind of material is used as the electrolyte solution, the lifespan characteristics are deteriorated, or it will be unusable any more or the safety may be threatened.

Moreover, these components necessarily require conductivity.

Therefore, according to the present disclosure, a conductive layer can be formed on a surface where the components come into contact with the electrolyte solution, thereby preventing corrosion due to the electrolyte solution while having conductivity.

On the other hand, the can body, the portion excluding the cap terminals of the top cap, and the gasket do not necessarily require conductivity, and thus the conductive layer does not need to be formed. However, a conductive layer may be formed even on the surface of these components, and such a structure is not excluded.

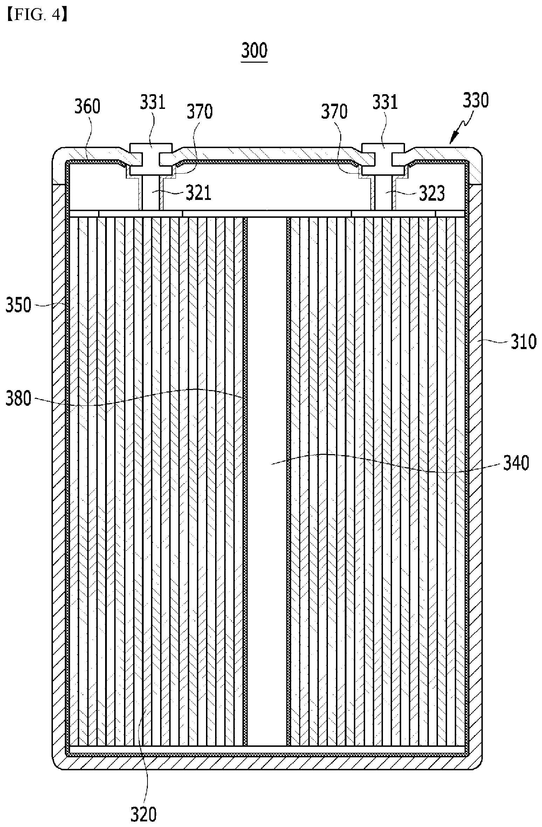

In the present disclosure, a perspective view of a prismatic secondary battery in which such a conductive layer is formed is shown in Fig. 4 below.

Referring to Fig. 4, the secondary battery 300 according to the present disclosure comprises a rectangular can body 310 that is opened in its upper end and houses the electrode assembly 320 and the electrolyte solution together, and a top cap 330 including cap terminals 331 that are coupled and sealed to the upper end part of the can body 310 and are connected to the electrode terminals 321 and 322 of the electrode assembly 320.

Here, the electrode assembly 320 is the same as those described for the cylindrical secondary battery.

Further, the electrode assembly 320 includes a positive electrode tab 321 and a negative electrode tab 322 drawn upward from the electrode assembly 320, and the positive electrode tab 321 and the negative electrode tab 322 are respectively connected to the can terminals 331.

At this time, since the positive electrode tab 321, the negative electrode tab 322, and the cap terminals 331 must have conductivity, a conductive layer 270 made of one selected from the group consisting of a conductive carbon layer, a conductive polymer layer, and a conductive epoxy layer are formed on the inside surface of the secondary battery 300.

On the other hand, a conductive layer for corrosion prevention may be formed on the portion excluding the cap terminals 331 of the prismatic can body 310 and the top cap 330, without being limited thereto, or the components do not necessarily require conductivity and thus, other anti-corrosion layers 250 and 260 may be formed.

Furthermore, the secondary battery 300 according to the present disclosure may further include a hollow center pin 340 inserted into the center of the jelly-roll type electrode assembly 320.

At this time, the center pin 340 may also made of metal, specifically any one selected from the group consisting of aluminum, nickel, stainless steel (SUS), copper, iron, bronze, and brass, which thus causes corrosion to the electrolyte solution. However, the conductivity is not necessarily required.

Therefore, although the outer surface and inner surface of the center pin 350 are not clearly shown in the figure, a conductive layer may also be formed on the outer surface coming into contact with an electrolyte solution in the center pin 350, other anti-corrosion layers 380 may be additionally formed, and more specifically, the anti-corrosion layer 380 may be formed up to the hollow inner surface.

On the other hand, in all cases, the conductive layer may have a thickness of 0.01 *µ*m to 100 *µ*m, specifically 0.5 *µ*m to 30 *µ*m, and more specifically, 1 *µ*m to 10 *µ*m.

If the conductive layer is too thin outside the above range, it cannot exhibit a sufficient anti-corrosion effect, and if the conductive layer is too thick, the conductivity may be lowered or the bulk energy density may be lowered, which is thus not preferable.

The metals constituting the above components may be made of any one selected from the group consisting of aluminum, nickel, stainless steel (SUS), copper, iron, bronze, and brass, and specifically, it may be made of aluminum or stainless steel (SUS), and more specifically, it may be made of stainless steel (SUS).

On the other hand, since the conductive layer should have conductivity as described above, it is made of, specifically, one selected from the group consisting of a conductive carbon layer and a conductive polymer layer.

Here, the conductive carbon layer may include graphene as a carbon-based material rather than a general carbon material, and further include a binder polymer.

When using the graphene, it can exhibit superior conductivity compared to the case of using other carbon-based materials. According to the present disclosure, for a coin-type secondary battery, ensuring conductivity is an important factor, and thus it is essential to ensure sufficient conductivity. Otherwise, the secondary battery performance may be deteriorated, and thus it is important to use graphene exhibiting most excellent conductivity among carbon-based materials.

The binder polymer is used for bonding between a metal member and a conductive carbon layer, and is not limited as long as it has a general binding component, and examples thereof may be at least one selected from the group consisting of polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butylene rubber, and fluorine rubber.

In this case, the graphene and the binder polymer may be contained in a weight ratio of 1:99 to 99: 1, and specifically in a weight ratio of 3:7 to 7:3.

When the content of the graphene is low outside the above range, sufficient conductivity cannot be obtained. On the contrary, when the content of the binder polymer is too low, sufficient binding strength of the conductive carbon layer cannot be obtained, which is thus not preferable.

For such a conductive carbon layer, a coating film forming method commonly used in the art may be used. For example, the conductive carbon layer can be formed by using a wet coating method such as gravure coating, slot die coating, spin coating, spray coating, bar coating and dip coating, or a dry coating method such as thermal evaporation, E-beam evaporation, chemical vapor deposition, and sputtering.

For the conductive polymer layer, polymers commonly known as conductive polymers may be used. The conductive polymer layer of the present invention includes at least one conductive polymer selected from the group consisting of poly(3,4-ethylenedioxythiophene)/poly(4-styrene sulfonate) (PEDOT/PSS), polyaniline (PANI), polypyrrole (PPy), polythiophene (PT), and polyacetylene (PA).

The conductive polymer layer may be formed by preparing a conductive polymer melt or a mixed solution in which these are dissolved in a solvent, and subjecting it to various wet coating methods as described in the coating method of the conductive carbon layer. At this time, when the conductive polymer is mixed with a solvent, the solvent may be a polar organic solvent, and for example, chloroform, dichloromethane, m-cresol, tetrahydrofuran (THF), and dimethylformamide (DMF) and the like may be mentioned.

On the other hand, the conductive polymer does not require a separate binder material and the like because the polymer itself exhibits a binding force.

However, for a more rigid binding, it may additionally include a binder polymer as disclosed in the conductive carbon layer, wherein the content thereof may be 0.1 to 10% by weight based on the total weight of the conductive polymer layer.

On the other hand, it is more preferable that the conductive layer has a configuration that can effectively prevent corrosion by an electrolyte solution even after long-term use while having excellent conductivity, and specifically, it may be a conductive polymer layer or a conductive epoxy layer.

However, the electrolyte contains a non-aqueous electrolyte and a lithium salt, and the coin-type secondary battery according to the present disclosure is more effective when a lithium imide-based salt is used as the lithium salt.

The lithium imide-based salt may be lithium bis(fluorosulfonyl)imide, lithium bis(trifluoromethanesulfonyl)imide or lithium bis(perfluoroethylsulfonyl)imide. Preferably, the lithium imide-based salt is lithium bis(fluorosulfonyl)imide or lithium bis(trifluoromethanesulfonyl)imide.

Hereinafter, preferred examples of the present disclosure, comparative examples compared thereto, and experimental examples for evaluating them will be described.

### <Preparation Example 1> (Conductive Carbon Layer Precursor Solution)

10 g of graphene as a conductive material was put in 200 g of NMP solvent, and then dispersed by adding an H-NBR dispersant, which was mixed with 5 g of PVdF as a binder to prepare a conductive carbon layer precursor solution.

### <Preparation Example 2> (Conductive Carbon Layer Precursor Solution)

10 g of natural graphite as a conductive material was put in 200 g of NMP solvent, and then dispersed by adding an H-NBR dispersant, which was mixed with 5 g of PVdF as a binder to prepare a conductive carbon layer precursor solution.

### <Preparation Example 3> (Conductive Carbon Layer Precursor Solution)

10 g of acetylene black as a conductive material was put in 200 g of NMP solvent, and then dispersed by adding an H-NBR dispersant, which was mixed with 5 g of PVdF as a binder to prepare a conductive carbon layer precursor solution.

### <Preparation Example 4> (Conductive Polymer Layer Precursor Solution)

10 g of polypyrrole as a conductive polymer was mixed with 100 g of dimethylformamide (DMF) as a solvent, and the mixture was stirred (40°C) for 48 hours with a magnetic bar to prepare a conductive polymer layer precursor solution.

### <Preparation Example 5> (Conductive Epoxy Layer Precursor Solution)

8331S product (two-component electroconductive epoxy adhesive containing silver) available from MG Chemicals was used.

### <Preparation Example 6> (Binder Solution)

7 g of polymethyl methacrylate (PMMA) as a polymer was mixed with 100 g of dimethylformamide (DMF) as a solvent, and the mixture was stirred (90°C) for 48 hours with a magnetic bar to prepare a binder solution.

### <Example 1> (not according to the invention)

The conductive carbon layer precursor solution prepared in Preparation Example 1 was coated (spray coated) onto the surface where the first case, the second case, the spring, and the spacer as a coin-type battery case could come into contact with the electrolyte solution as shown in Fig. 1. A positive electrode mixture having a composition of 95 wt.% of positive active material (LiNi_{0.6}Co_{0.2}Mn_{0.2}O₂), 2.5 wt.% of Super-P (conductive material), and 2.5 wt.% of PVDF (binder) was added to NMP (N-methyl-2- pyrrolidone) as a solvent to prepare a positive electrode slurry, and then the slurry was coated (100 *µ*m) onto an aluminum current collector substrate to prepare a coin-type positive electrode.

A negative electrode mixture having a composition of 95 wt.% of artificial graphite, 2.5 wt.% of Super-P (conductive material), and 2.5 wt.% of PVDF (binder) was added to NMP (N-methyl-2- pyrrolidone) as a solvent to prepare a negative electrode slurry, and then the slurry was coated (100 *µ*m) onto a copper current collector substrate to prepare a coin-type negative electrode.

A polyethylene-based separator was interposed between the prepared positive electrode and negative electrode to prepare an electrode assembly, and the electrode assembly was incorporated in the coin-type case as shown in Fig. 1, and a solution of ethylene carbonate (EC) and dimethyl carbonate (DMC) in a volume ratio of 1:1 in which 1 M LiFSI was dissolved was injected as an electrolyte, and then sealed with a gasket to manufacture a coin-type secondary battery.

### <Example 2>

A coin-type secondary battery was manufactured in the same manner in Example 1, except that in Example 1, the conductive polymer layer precursor solution prepared in Preparation Example 4 was coated (spray coated) onto the surface where the first case, the second case, the spring, and the spacer as a coin-type battery case could come into contact with the electrolyte solution.

### <Example 3> (not according to the invention)

A coin-type secondary battery was manufactured in the same manner in Example 1, except that in Example 1, the conductive epoxy layer precursor solution prepared in Preparation Example 5 was coated (spray coated) onto the surface where the first case, the second case, the spring, and the spacer as a coin-type battery case could come into contact with the electrolyte solution.

### <Example 4> (not according to the inventon)

A coin-type secondary battery was manufactured in the same manner in Example 1, except that in Example 1, the conductive carbon layer precursor solution prepared in Preparation Example 2 was coated (spray coated) onto the surface where the first case, the second case, the spring, and the spacer as a coin-type battery case could come into contact with the electrolyte solution.

### <Example 5> (not according to the invention)

A coin-type secondary battery was manufactured in the same manner in Example 1, except that in Example 1, the conductive carbon layer precursor solution prepared in Preparation Example 3 was coated (spray coated) onto the surface where the first case, the second case, the spring, and the spacer as a coin-type battery case could come into contact with the electrolyte solution.

### <Comparative Example 1>

A coin-type secondary battery was manufactured in the same manner in Example 1, except that in Example 1, any coating treatment was not performed onto the surface where the first case, the second case, the spring, and the spacer as a coin-type battery case could come into contact with the electrolyte solution.

### <Experimental Example 1>

The coin cell batteries manufactured in Examples 1 to 5 and Comparative Example 1 were charged and discharged 100 times under the following conditions, and then the 100-time discharge capacity retention relative to the one-time discharge capacity was calculated, and the results are shown in Table 1 below.
Charge: 0.3C, CC/CV, 4.25V, 1/20C cut-off
Discharge: 0.3C, CC, 3.0V, cut-off

**[Table 1]**

| | 100-time capacity retention (%) |
|---|---|
| Example 1 | 99 |
| Example 2 | 96 |
| Example 3 | 99 |
| Example 4 | 95 |
| Example 5 | 97 |
| Comparative Example 3 | 62 |

Referring to Table 1, it can be confirmed that when the conductive layer is formed according to the present disclosure, it exhibits excellent lifetime characteristics as compared with Comparative Example 3 that was failed to take any action.

### <Experimental Example 2>

The coin cell batteries manufactured in Examples 1 and 4 and 5 were rate-evaluated under the following conditions.
[1 to 3rd cycle charge/discharge conditions]
Charge: 0.1C, CC/CV, 4.25V, 1/20C cut-off
Discharge: 0.1C, CC, 3.0V, cut-off
[4 to 6th cycle charge/discharge conditions]
Charge: 0.1C, CC/CV, 4.25V, 1/20C cut-off
Discharge: 2C, CC, 3.0 V, cut-off

The capacity retention of the average discharge capacity value at 2 C obtained in the 4th to 6th cycle relative to the average discharge capacity value at 0.1C obtained in the initial 3-time charge/discharge was calculated, and the results are shown in Table 2 below.

**[Table 2]**

| | 2C discharge capacity retention (%) |
|---|---|
| Example 1 | 89 |
| Example 4 | 60 |
| Example 5 | 75 |

Referring to Table 2, it can be confirmed that when the conductive carbon layer containing a conductive material other than graphene was coated according to Comparative Examples 1 and 2, metal corrosion can be prevented in Experimental Example 1 and thus lifetime characteristics are excellent, but compared with the case of using graphene, the conductivity is reduced by the coating and the rate characteristic is lowered, which is thus not preferable.

### <Example 6> (not according to the invention)

The conductive carbon layer precursor solution prepared in Preparation Example 1 was coated (spray coated) onto the housing part of the cylindrical battery case, the beading part and the upper end cap.

A positive electrode mixture having a composition of 95 wt.% of positive active material (LiNi_{0.6}Co_{0.2}Mn_{0.2}O₂), 2.5 wt.% of Super-P (conductive material), and 2.5 wt.% of PVDF (binder) was added to NMP (N-methyl-2- pyrrolidone) as a solvent to prepare a positive electrode slurry, and then the slurry was coated (100 *µ*m) onto an aluminum current collector substrate to prepare a coin-type positive electrode.

A negative electrode mixture having a composition of 95 wt.% of artificial graphite, 2.5 wt.% of Super-P (conductive material), and 2.5 wt.% of PVDF (binder) was added to NMP (N-methyl-2- pyrrolidone) as a solvent to prepare a negative electrode slurry, and then the slurry was coated (100 *µ*m) onto a copper current collector substrate to prepare a coin-type negative electrode.

A polyethylene-based separator was interposed between the prepared positive electrode and negative electrode to prepare an electrode assembly, and the electrode assembly was incorporated in the cylindrical battery case as shown in Fig. 1, and a solution of ethylene carbonate (EC) and dimethyl carbonate (DMC) in a volume ratio of 1:1 in which 1 M LiFSI was dissolved was injected as an electrolyte, and then sealed with a gasket to manufacture a cylindrical secondary battery.

### <Example 7>

A cylindrical secondary battery was manufactured in the same manner in Example 6, except that in Example 1, the conductive polymer layer precursor solution prepared in Preparation Example 4 was coated onto the housing part of the cylindrical battery case, the beading part and the upper end cap.

### <Example 8> (not according to the invention)

A cylindrical secondary battery was manufactured in the same manner in Example 6, except that in Example 1, the conductive epoxy layer precursor solution prepared in Preparation Example 5 was coated onto the housing part of the cylindrical battery case, the beading part and the upper end cap.

### <Example 9> (not according to the invention)

A cylindrical secondary battery was manufactured in the same manner in Example 6, except that in Example 1, the conductive carbon layer precursor solution prepared in Preparation Example 3 was coated onto the housing part of the cylindrical battery case, the beading part and the upper end cap.

### <Comparative Example 2>

A cylindrical secondary battery was manufactured in the same manner in Example 6, except that in Example 1, any coating treatment was not performed onto the housing part of the cylindrical battery case, the beading part and the upper end cap.

### <Comparative Example 3>

A cylindrical secondary battery was manufactured in the same manner in Example 6, except that in Example 1, Cr metal was electrolytically-plated and coated onto the housing part of the cylindrical battery case, the beading part and the upper end cap.

### < Comparative Example 4>

A cylindrical secondary battery was manufactured in the same manner in Example 6, except that in Example 1, the binder solution prepared in Preparation Example 6 was coated onto the housing part of the cylindrical battery case and the beading part. In the case of coating the upper end cap with a binder solution, it acts as a resistance of a large current, and thus the lifetime characteristics cannot be evaluated. Therefore, the binder coating was formed only on the housing part and the beading part.

### <Experimental Example 3>

The cylindrical secondary batteries manufactured in Examples 6 to 9 and Comparative Examples 2 to 4 were charged and discharged 100 times under the following conditions, and then the 100-time discharge capacity retention relative to the one-time discharge capacity was calculated, and the results are shown in Table 3 below.
Charge: 0.3C, CC/CV, 4.25V, 1/20C cut-off
Discharge: 0.3C, CC, 3.0 V, cut-off

**[Table 3]**

| | 50-time capacity retention (%) |
|---|---|
| Example 6 | 99 |
| Example 7 | 96 |
| Example 8 | 99 |
| Example 9 | 97 |
| Comparative Example 2 | 45 |
| Comparative Example 3 | 75 |
| Comparative Example 4 | 55 |

Referring to Table 3, it can be confirmed that when the conductive layer is formed according to the present disclosure, it exhibits excellent lifetime characteristics as compared with Comparative Example 2 electrolytically coated with another metal and Comparative Example 3 in which a binder layer was formed,

### <Experimental Example 4>

The cylindrical secondary batteries manufactured in Examples 6 and 9 were rate-evaluated under the following conditions.
[1 to 3rd cycle charge/discharge conditions]
Charge: 0.1C, CC/CV, 4.25V, 1/20C cut-off
Discharge: 0.1C, CC, 3.0V, cut-off
[4 to 6th cycle charge/discharge conditions]
Charge: 0.1C, CC/CV, 4.25V, 1/20C cut-off
Discharge: 2C, CC, 3.0 V, cut-off

The capacity retention of the average discharge capacity value at 2 C obtained in the 4th to 6th cycle relative to the average discharge capacity value at 0.1C obtained in the initial 3-time charge/discharge was calculated, and the results are shown in Table 4 below.

**[Table 4]**

| | 2C discharge capacity retention (%) |
|---|---|
| Example 6 | 89 |
| Example 9 | 80 |

Referring to Table 4, it can be confirmed that even if the same conductive carbon layer is formed, the use of graphene exhibits superior rate characteristics than when acetylene black is used.

### [Industrial Applicability]

As described above, since the secondary battery according to the present disclosure has a conductive layer formed on a part or the whole of the inner surface of the battery case capable of coming into contact with the electrolyte solution, and additionally on the outer surface of the components, and thus it is possible to wholly cover the part that can be corroded by the electrolyte solution without reducing the conductivity, and effectively prevent the corrosion.

## Claims

1. A secondary battery (100) configured such that an electrode assembly (110) including a positive electrode (111), a separator (113), and a negative electrode (112) is housed in a battery case together with an electrolyte solution,
wherein the battery case is made of metal, and a conductive polymer layer (151, 152, 153, 154) is formed on a part or the whole of the inner surface of the battery case coming into contact with the electrolyte solution,
the electrode assembly is a coin-type electrode assembly (110),
the battery case comprises a first case (120) for housing the electrode assembly; and a second case (130) for covering the upper end part of the first case (120),
a conductive layer (151, 152, 153, 154) made of a conductive polymer layer is formed on an inner surface where the first case (120) and the second case (130) come into contact with an electrolyte solution, and
the conductive polymer layer comprises at least one conductive polymer selected from the group consisting of poly(3,4-ethylenedioxythiophene)/poly(4-styrene sulfonate (PEDOT/PSS), polypyrrole (PPy), polythiophene (PT), and polyacetylene (PA).

2. The secondary battery (100) according to claim 1, wherein:
the secondary battery further comprises a spring (160) and a spacer (170) that fill an inner space excluding the electrode assembly (110) in the inside of the first case (120) and the second case (130),
the spring (160) and the spacer 8170) are made of metal,
the conductive layer (151, 152, 153, 154) is formed on a surface where the spring (160) and the spacer (170) come into contact with the electrolyte solution.

3. The secondary battery (100) according to claim 1,
which further comprises a gasket (140) for sealing the first case (120) and the second case (130).

4. The secondary battery according to any one of claims 1, wherein:
the metal is made of any one selected from the group consisting of aluminum, nickel, stainless steel (SUS), copper, iron, bronze, and brass.

5. The secondary battery according to claim 1, wherein:
the conductive layer is formed to a thickness of 0.01 *µ*m to 100 *µ*m.

6. A secondary battery (200) configured such that an electrode assembly (220) including a positive electrode, a separator, and a negative electrode is housed in a battery case together with an electrolyte solution,
wherein the battery case is made of metal, and a conductive polymer layer (270) is formed on a part or the whole of the inner surface of the battery case coming into contact with the electrolyte solution,
the secondary battery is a cylindrical secondary battery,
the electrode assembly (220) is a jelly-roll type or stack/folding type electrode assembly,
the battery case comprises a cylindrical can (210) that includes a housing part (211) in which the electrode assembly (220) and the electrolyte solution are housed together and a beading part (212) located at an upper part of the housing part (211); and a cap assembly (230) that is mounted on the opened upper end part of the cylindrical can (210) and comprises an upper end cap (231) as a protrusion-type electrode terminal,
the conductive layer (270) made of a conductive polymer layer is formed on a bottom surface (213) of the cylindrical can (210) and the partial or whole surface of the cap assembly (230) toward the inner surface of the secondary battery, and
the conductive polymer layer comprises at least one conductive polymer selected from the group consisting of poly(3,4-ethylenedioxythiophene)/poly(4-styrene sulfonate (PEDOT/PSS), polypyrrole (PPy), polythiophene (PT), and polyacetylene (PA).

7. The secondary battery (200) according to claim 6, wherein:
a gasket (240) is mounted on the upper part of the beading part (212) of the cylindrical can (210),
the cap assembly (230) is configured such that a safety device for current interruption (PTC device) (232) and a safety vent (233) for internal pressure drop are stacked under the upper end cap (231), and a current interruption device (CID) (234) is formed at the lower end of the safety vent (233),
the electrode assembly comprises a positive electrode tab (221) and a negative electrode tab (222) that are drawn out from the electrode assembly, wherein the positive electrode tab (221) is connected to the cap assembly (230), and the negative electrode tab (222) is connected to the bottom surface (213) spaced apart from the housing part (211) of the cylindrical can (210), and
the conductive layer (270) is formed on the inside surface of the secondary battery, in at least one member selected from the group consisting of the top cap, the bottom surface (213) of the cylindrical can (210), the safety device (232) for blocking current, a safety vent (233), a current interruption device (234), a positive electrode tab (221), and a negative electrode tab (222).

8. The secondary battery according to any one of claims 6, wherein:
the metal is made of any one selected from the group consisting of aluminum, nickel, stainless steel (SUS), copper, iron, bronze, and brass.

9. The secondary battery according to any one of claims 6, wherein:
the secondary battery further comprises a hollow center pin (250) inserted into the center of the electrode assembly.

10. The secondary battery according to claim 6, wherein:
the conductive layer is formed to a thickness of 0.01 *µ*m to 100 *µ*m.

11. A secondary battery (300) configured such that an electrode assembly (320) including a positive electrode, a separator, and a negative electrode is housed in a battery case together with an electrolyte solution,
wherein the battery case is made of metal, and a conductive layer (370) made of one selected from the group consisting of a conductive carbon layer and a conductive polymer layer is formed on a part or the whole of the inner surface of the battery case coming into contact with the electrolyte solution,
wherein the conductive carbon layer is composed of graphene and binder polymer in a weight ratio of 3:7 to 99: 1,
wherein the conductive polymer layer comprises at least one conductive polymer selected from the group consisting of poly(3,4-ethylenedioxythiophene)/poly(4-styrene sulfonate (PEDOT/PSS), polyaniline (PANI), polypyrrole (PPy), polythiophene (PT), and polyacetylene (PA),
the secondary battery is a prismatic secondary battery,
the electrode assembly (320) is a jelly-roll type or stack/folding type electrode assembly,
the battery case comprises a rectangular can body (310) that is opened in its upper end and houses the electrode assembly (320) and the electrolyte solution together; and a top cap (330) including cap terminals (331) that are coupled and sealed to the upper end part of the can body (310) and are connected to the electrode terminals (321, 322) of the electrode assembly (320), and
a conductive layer (370) is formed on a surface of the cap terminals (331) of the top cap (330) toward the inner surface of the secondary battery.

12. The secondary battery (300) according to claim 11, wherein:
the electrode assembly comprises a positive electrode tab (321) and a negative electrode tab (322) drawn out from the electrode assembly (320), the positive tab (321) and the negative tab (322) are respectively connected to the cap terminals (331), and
a conductive layer (370) is formed on the inside surface of the secondary battery, in at least one member selected from the group consisting of the positive electrode tab (321) and the negative electrode tab (322).

13. The secondary battery according to any one of claims 11, wherein:
the metal is made of any one selected from the group consisting of aluminum, nickel, stainless steel (SUS), copper, iron, bronze, and brass.

14. The secondary battery according to any one of claims 11, wherein:
the secondary battery further comprises a hollow center pin (340) inserted into the center of the electrode assembly.

15. The secondary battery according to claim 11, wherein:
the conductive layer is formed to a thickness of 0.01 *µ*m to 100 *µ*m.

## Patentansprüche

1. Sekundärbatterie (100), die so konfiguriert ist, dass eine Elektrodenanordnung (110), die eine positive Elektrode (111), einen Separator (113) und eine negative Elektrode (112) enthält, zusammen mit einer Elektrolytlösung in einem Batteriegehäuse untergebracht ist,
wobei das Batteriegehäuse aus Metall hergestellt ist und eine leitfähige Polymerschicht (151, 152, 153, 154) auf einem Teil oder der gesamten Innenfläche des Batteriegehäuses gebildet ist, die mit der Elektrolytlösung in Kontakt kommt,
die Elektrodenanordnung eine Elektrodenanordnung (110) vom Münztyp ist,
das Batteriegehäuse ein erstes Gehäuse (120) zum Unterbringen der Elektrodenanordnung und ein zweites Gehäuse (130) zum Abdecken des oberen Endteils des ersten Gehäuses (120) umfasst,
eine leitfähige Schicht (151, 152, 153, 154), die aus einer leitfähigen Polymerschicht hergestellt ist, auf einer Innenfläche gebildet ist, wo das erste Gehäuse (120) und das zweite Gehäuse (130) mit einer Elektrolytlösung in Kontakt kommen, und
die leitfähige Polymerschicht mindestens ein leitfähiges Polymer umfasst, das aus der Gruppe ausgewählt ist, die aus Poly(3,4-ethylendioxythiophen)/Poly(4-styrolsulfonat (PEDOT/PSS), Polypyrrol (PPy), Polythiophen (PT) und Polyacetylen (PA) besteht.

2. Sekundärbatterie (100) nach Anspruch 1, wobei:
die Sekundärbatterie ferner eine Feder (160) und einen Abstandshalter (170) umfasst, die einen Innenraum mit Ausnahme der Elektrodenanordnung (110) im Inneren des ersten Gehäuses (120) und des zweiten Gehäuses (130) füllen,
die Feder (160) und der Abstandshalter (170) aus Metall hergestellt sind,
die leitfähige Schicht (151, 152, 153, 154) auf einer Fläche gebildet ist, wo die Feder (160) und der Abstandshalter (170) mit der Elektrolytlösung in Kontakt kommen.

3. Sekundärbatterie (100) nach Anspruch 1,
die ferner eine Dichtung (140) zum Abdichten des ersten Gehäuses (120) und des zweiten Gehäuses (130) umfasst.

4. Sekundärbatterie nach einem der Ansprüche 1, wobei:
das Metall aus einem hergestellt ist, das aus der Gruppe ausgewählt ist, die aus Aluminium, Nickel, Edelstahl (SUS), Kupfer, Eisen, Bronze und Messing besteht.

5. Sekundärbatterie nach Anspruch 1, wobei:
die leitfähige Schicht mit einer Dicke von 0,01 µm bis 100 µm gebildet ist.

6. Sekundärbatterie (200), die so konfiguriert ist, dass eine Elektrodenanordnung (220), die eine positive Elektrode, einen Separator und eine negative Elektrode enthält, zusammen mit einer Elektrolytlösung in einem Batteriegehäuse untergebracht ist,
wobei das Batteriegehäuse aus Metall hergestellt ist und eine leitfähige Polymerschicht (270) auf einem Teil oder der gesamten Innenfläche des Batteriegehäuses gebildet ist, die mit der Elektrolytlösung in Kontakt kommt,
die Sekundärbatterie eine zylindrische Sekundärbatterie ist,
die Elektrodenanordnung (220) eine Elektrodenanordnung vom Jelly-Roll-Typ oder Stapel-/Falttyp ist,
das Batteriegehäuse eine zylindrische Dose (210) umfasst, die einen Gehäuseteil (211), in dem die Elektrodenanordnung (220) und die Elektrolytlösung zusammen untergebracht sind, und einen Wulstteil (212), der sich an einem oberen Teil des Gehäuseteils (211) befindet, enthält; und eine Kappenanordnung (230), die an dem geöffneten oberen Endteil der zylindrischen Dose (210) montiert ist und eine obere Endkappe (231) als Elektrodenanschluss vom vorstehenden Typ umfasst,
die leitfähige Schicht (270), die aus einer leitfähigen Polymerschicht hergestellt ist, auf einer Bodenfläche (213) der zylindrischen Dose (210) und der teilweisen oder gesamten Fläche der Kappenanordnung (230) in Richtung der Innenfläche der Sekundärbatterie gebildet ist, und
die leitfähige Polymerschicht mindestens ein leitfähiges Polymer umfasst, das aus der Gruppe ausgewählt ist, die aus Poly(3,4-ethylendioxythiophen)/Poly(4-styrolsulfonat (PEDOT/PSS), Polypyrrol (PPy), Polythiophen (PT) und Polyacetylen (PA) besteht.

7. Sekundärbatterie (200) nach Anspruch 6, wobei:
eine Dichtung (240) an dem oberen Teil des Wulstteils (212) der zylindrischen Dose (210) montiert ist,
die Kappenanordnung (230) so konfiguriert ist, dass eine Sicherheitsvorrichtung zur Stromunterbrechung (PTC-Vorrichtung) (232) und eine Sicherheitsentlüftung (233) für internen Druckabfall unter der oberen Endkappe (231) gestapelt sind, und eine Stromunterbrechungsvorrichtung (CID) (234) an dem unteren Ende der Sicherheitsentlüftung (233) gebildet ist,
die Elektrodenanordnung eine positive Elektrodenlasche (221) und eine negative Elektrodenlasche (222) umfasst, die aus der Elektrodenanordnung herausgezogen sind, wobei die positive Elektrodenlasche (221) mit der Kappenanordnung (230) verbunden ist und die negative Elektrodenlasche (222) mit der Bodenfläche (213) verbunden ist, die von dem Gehäuseteil (211) der zylindrischen Dose (210) beabstandet ist, und
die leitfähige Schicht (270) auf der Innenfläche der Sekundärbatterie in mindestens einem Element gebildet ist, das aus der Gruppe ausgewählt ist, die aus der oberen Kappe, der Bodenfläche (213) der zylindrischen Dose (210), der Sicherheitsvorrichtung (232) zum Blockieren von Strom, einer Sicherheitsentlüftung (233), einer Stromunterbrechungsvorrichtung (234), einer positiven Elektrodenlasche (221) und einer negativen Elektrodenlasche (222) besteht.

8. Sekundärbatterie nach einem der Ansprüche 6, wobei:
das Metall aus einem hergestellt ist, das aus der Gruppe ausgewählt ist, die aus Aluminium, Nickel, Edelstahl (SUS), Kupfer, Eisen, Bronze und Messing besteht.

9. Sekundärbatterie nach einem der Ansprüche 6, wobei:
die Sekundärbatterie ferner einen hohlen Mittelstift (250) umfasst, der in die Mitte der Elektrodenanordnung eingesetzt ist.

10. Sekundärbatterie nach Anspruch 6, wobei:
die leitfähige Schicht mit einer Dicke von 0,01 µm bis 100 µm gebildet ist.

11. Sekundärbatterie (300), die so konfiguriert ist, dass eine Elektrodenanordnung (320), die eine positive Elektrode, einen Separator und eine negative Elektrode enthält, zusammen mit einer Elektrolytlösung in einem Batteriegehäuse untergebracht ist,
wobei das Batteriegehäuse aus Metall hergestellt ist und eine leitfähige Schicht (370), die aus einem hergestellt ist, das aus der Gruppe ausgewählt ist, die aus einer leitfähigen Kohlenstoffschicht und einer leitfähigen Polymerschicht besteht, auf einem Teil oder der gesamten Innenfläche des Batteriegehäuses gebildet ist, die mit der Elektrolytlösung in Kontakt kommt,
wobei die leitfähige Kohlenstoffschicht aus Graphen und einem Bindemittelpolymer in einem Gewichtsverhältnis von 3:7 bis 99:1 besteht,
wobei die leitfähige Polymerschicht mindestens ein leitfähiges Polymer umfasst, das aus der Gruppe ausgewählt ist, die aus Poly(3,4-ethylendioxythiophen)/Poly(4-styrolsulfonat (PEDOT/PSS), Polyanilin (PANI), Polypyrrol (PPy), Polythiophen (PT) und Polyacetylen (PA) besteht,
die Sekundärbatterie eine prismatische Sekundärbatterie ist,
die Elektrodenanordnung (320) eine Elektrodenanordnung vom Jelly-Roll-Typ oder Stapel-/Falttyp ist,
das Batteriegehäuse einen rechteckigen Dosenkörper (310), der in seinem oberen Ende geöffnet ist und die Elektrodenanordnung (320) und die Elektrolytlösung zusammen aufnimmt; und eine obere Kappe (330) umfasst, die Kappenanschlüsse (331) enthält, die mit dem oberen Endteil des Dosenkörpers (310) gekoppelt und abgedichtet sind und mit den Elektrodenanschlüssen (321, 322) der Elektrodenanordnung (320) verbunden sind, und
eine leitfähige Schicht (370) auf einer Fläche der Kappenanschlüsse (331) der oberen Kappe (330) in Richtung der Innenfläche der Sekundärbatterie gebildet ist.

12. Sekundärbatterie (300) nach Anspruch 11, wobei:
die Elektrodenanordnung eine positive Elektrodenlasche (321) und eine negative Elektrodenlasche (322) umfasst, die aus der Elektrodenanordnung (320) herausgezogen sind, wobei die positive Lasche (321) und die negative Lasche (322) jeweils mit den Kappenanschlüssen (331) verbunden sind, und
eine leitfähige Schicht (370) auf der Innenfläche der Sekundärbatterie in mindestens einem Element gebildet ist, das aus der Gruppe ausgewählt ist, die aus der positiven Elektrodenlasche (321) und der negativen Elektrodenlasche (322) besteht.

13. Sekundärbatterie nach einem der Ansprüche 11, wobei:
das Metall aus einem hergestellt ist, das aus der Gruppe ausgewählt ist, die aus Aluminium, Nickel, Edelstahl (SUS), Kupfer, Eisen, Bronze und Messing besteht.

14. Sekundärbatterie nach einem der Ansprüche 11, wobei:
die Sekundärbatterie ferner einen hohlen Mittelstift (340) umfasst, der in die Mitte der Elektrodenanordnung eingesetzt ist.

15. Sekundärbatterie nach Anspruch 11, wobei:
die leitfähige Schicht mit einer Dicke von 0,01 µm bis 100 µm gebildet ist.

## Revendications

1. Batterie secondaire (100) configurée de telle sorte qu'un ensemble d'électrodes (110) comprenant une électrode positive (111), un séparateur (113) et une électrode négative (112) est reçu dans un boîtier de batterie avec une solution électrolytique,
dans laquelle le boîtier de batterie est réalisé en métal et une couche polymère conductrice (151, 152, 153, 154) est formée sur une partie ou sur la totalité de la surface intérieure du boîtier de batterie qui entre en contact avec la solution électrolytique,
l'ensemble d'électrodes est un ensemble d'électrodes du type bouton (110),
le boîtier de batterie comporte un premier boîtier (120) servant à recevoir l'ensemble d'électrodes ; et un deuxième boîtier (130) servant à recouvrir la partie d'extrémité supérieure du premier boîtier (120),
une couche conductrice (151, 152, 153, 154) constituée à partir d'une couche polymère conductrice est formée sur une surface intérieure où le premier boîtier (120) et le deuxième boîtier (130) entrent en contact avec une solution électrolytique, et
la couche polymère conductrice comporte au moins un polymère conducteur sélectionné dans le groupe constitué par le poly(3,4-éthylènedioxythiophène)/poly(4-styrène sulfonate) (PEDOT/PSS), le polypyrrole (PPy), le polythiophène (PT) et le polyacétylène (PA).

2. Batterie secondaire (100) selon la revendication 1, dans laquelle :
la batterie secondaire comporte par ailleurs un ressort (160) et une entretoise (170) qui remplissent un espace intérieur à l'exclusion de l'ensemble d'électrodes (110) à l'intérieur du premier boîtier (120) et du deuxième boîtier (130),
le ressort (160) et l'entretoise (170) sont réalisés en métal,
la couche conductrice (151, 152, 153, 154) est formée sur une surface où le ressort (160) et l'entretoise (170) entrent en contact avec la solution électrolytique.

3. Batterie secondaire (100) selon la revendication 1,
qui comporte par ailleurs un joint d'étanchéité (140) servant à sceller le premier boîtier (120) et le deuxième boîtier (130).

4. Batterie secondaire selon la revendication 1, dans laquelle :
le métal est réalisé à partir de n'importe quel métal sélectionné dans le groupe constitué par de l'aluminium, du nickel, de l'acier inoxydable (SUS), du cuivre, du fer, du bronze et du laiton.

5. Batterie secondaire selon la revendication 1, dans laquelle :
la couche conductrice est formée sur une épaisseur allant de 0,01 µm à 100 µm.

6. Batterie secondaire (200) configurée de telle sorte qu'un ensemble d'électrodes (220) comprenant une électrode positive, un séparateur et une électrode négative est reçu dans un boîtier de batterie avec une solution électrolytique,
dans laquelle le boîtier de batterie est réalisé en métal, et une couche polymère conductrice (270) est formée sur une partie ou sur la totalité de la surface intérieure du boîtier de batterie qui entre en contact avec la solution électrolytique,
la batterie secondaire est une batterie secondaire cylindrique,
l'ensemble d'électrodes (220) est un ensemble d'électrodes du type à enroulement en spirale ou du type empilé/plié,
le boîtier de batterie comporte un boîtier cylindrique (210) qui comprend une partie formant logement (211) dans laquelle l'ensemble d'électrodes (220) et la solution électrolytique sont reçus ensemble et une partie formant bourrelet (212) située au niveau d'une partie supérieure de la partie formant logement (211) ; et un ensemble formant capuchon (230) qui est monté sur la partie d'extrémité supérieure ouverte du boîtier cylindrique (210) et qui comporte un capuchon d'extrémité supérieure (231) servant de borne d'électrode du type à partie saillante,
la couche conductrice (270) constituée à partir d'une couche polymère conductrice est formée sur une surface inférieure (213) du boîtier cylindrique (210) et sur la surface partielle ou totale de l'ensemble formant capuchon (230) vers la surface intérieure de la batterie secondaire, et
la couche polymère conductrice comporte au moins un polymère conducteur sélectionné dans le groupe constitué par le poly(3,4-éthylènedioxythiophène)/poly(4-styrène sulfonate) (PEDOT/PSS), le polypyrrole (PPy), le polythiophène (PT) et le polyacétylène (PA).

7. Batterie secondaire (200) selon la revendication 6, dans laquelle :
un joint d'étanchéité (240) est monté sur la partie supérieure de la partie formant bourrelet (212) du boîtier cylindrique (210),
l'ensemble formant capuchon (230) est configuré de telle sorte qu'un dispositif de sécurité en cas d'interruption de courant (dispositif PTC) (232) et un évent de sécurité (233) en cas de chute de pression interne sont empilés sous le capuchon d'extrémité supérieure (231), et un dispositif d'interruption de courant (CID) (234) est formé au niveau de l'extrémité inférieure de l'évent de sécurité (233),
l'ensemble d'électrodes comporte une languette d'électrode positive (221) et une languette d'électrode négative (222) qui sont extraites de l'ensemble d'électrodes, dans laquelle la languette d'électrode positive (221) est connectée à l'ensemble formant capuchon (230), et la languette d'électrode négative (222) est connectée à la surface inférieure (213) espacée de la partie formant logement (211) du boîtier cylindrique (210), et
la couche conductrice (270) est formée sur la surface intérieure de la batterie secondaire, dans au moins un élément sélectionné dans le groupe constitué par le capuchon supérieur, la surface inférieure (213) du boîtier cylindrique (210), le dispositif de sécurité (232) servant à bloquer le courant, un évent de sécurité (233), un dispositif d'interruption de courant (234), une languette d'électrode positive (221) et une languette d'électrode négative (222).

8. Batterie secondaire selon la revendication 6, dans laquelle :
le métal est réalisé à partir de n'importe quel métal sélectionné dans le groupe constitué par de l'aluminium, du nickel, de l'acier inoxydable (SUS), du cuivre, du fer, du bronze et du laiton.

9. Batterie secondaire selon la revendication 6, dans laquelle :
la batterie secondaire comporte par ailleurs une broche centrale creuse (250) insérée jusqu'au centre de l'ensemble d'électrodes.

10. Batterie secondaire selon la revendication 6, dans laquelle :
la couche conductrice est formée sur une épaisseur allant de 0,01 µm à 100 µm.

11. Batterie secondaire (300) configurée de telle sorte qu'un ensemble d'électrodes (320) comprenant une électrode positive, un séparateur et une électrode négative est reçu dans un boîtier de batterie avec une solution électrolytique,
dans laquelle le boîtier de batterie est réalisé en métal, et une couche conductrice (370) constituée à partir d'une couche sélectionnée dans le groupe constitué par une couche de carbone conductrice et une couche de polymère conductrice est formée sur une partie ou sur la totalité de la surface intérieure du boîtier de batterie qui entre en contact avec la solution électrolytique,
dans laquelle la couche de carbone conductrice est composée de graphène et de polymère liant selon un rapport pondéral allant de 3:7 à 99:1,
dans laquelle la couche polymère conductrice comporte au moins un polymère conducteur sélectionné dans le groupe constitué par le poly(3,4-éthylènedioxythiophène)/poly(4-styrène sulfonate (PEDOT/PSS), la polyaniline (PANI), le polypyrrole (PPy), le polythiophène (PT) et le polyacétylène (PA),
la batterie secondaire est une batterie secondaire prismatique,
l'ensemble d'électrodes (320) est un ensemble d'électrodes du type à enroulement en spirale ou du type empilé/plié,
le boîtier de batterie comporte un corps de boîtier rectangulaire (310) qui est ouvert au niveau de son extrémité supérieure et qui reçoit l'ensemble d'électrodes (320) et la solution électrolytique ensemble ; et un capuchon supérieur (330) comprenant des bornes de capuchon (331) qui sont couplées et scellées au niveau de la partie d'extrémité supérieure du corps de boîtier (310) et qui sont connectées aux bornes d'électrode (321, 322) de l'ensemble d'électrodes (320), et
une couche conductrice (370) est formée sur une surface des bornes de capuchon (331) du capuchon supérieur (330) vers la surface intérieure de la batterie secondaire.

12. Batterie secondaire (300) selon la revendication 11, dans laquelle :
l'ensemble d'électrodes comporte une languette d'électrode positive (321) et une languette d'électrode négative (322) extraites de l'ensemble d'électrodes (320), la languette positive (321) et la languette négative (322) sont respectivement connectées aux bornes de capuchon (331), et
une couche conductrice (370) est formée sur la surface intérieure de la batterie secondaire, dans au moins un élément sélectionné dans le groupe constitué par la languette d'électrode positive (321) et la languette d'électrode négative (322).

13. Batterie secondaire selon la revendication 11, dans laquelle :
le métal est réalisé à partir de n'importe quel métal sélectionné dans le groupe constitué par de l'aluminium, du nickel, de l'acier inoxydable (SUS), du cuivre, du fer, du bronze et du laiton.

14. Batterie secondaire selon la revendication 11, dans laquelle :
la batterie secondaire comporte par ailleurs une broche centrale creuse (340) insérée jusqu'au centre de l'ensemble d'électrodes.

15. Batterie secondaire selon la revendication 11, dans laquelle :
la couche conductrice est formée sur une épaisseur allant de 0,01 µm à 100 µm.
